Europäisches Patentamt

European Patent Office

Office européen des brevets

Publication number: **0 286 943**

**A2**

# EUROPEAN PATENT APPLICATION

(21) Application number: **88105392.0**

(22) Date of filing: **05.04.88**

(51) Int. Cl.⁴ **C09J 7/00 , C09J 3/16 , C08J 5/12 , B32B 27/00**

(30) Priority: **13.04.87 IT 2009087**

(43) Date of publication of application:
**19.10.88 Bulletin 88/42**

(84) Designated Contracting States:
**AT BE CH DE ES FR GB GR IT LI LU NL SE**

(71) Applicant: **STAC SRL**
**via S. Faustino 64**
**Milano(IT)**

(72) Inventor: **Marinelli, Giuseppe**
**via Abeti 24**
**Milano(IT)**

(74) Representative: **Gervasi, Gemma, Dr.**
**Studio Brevetti e Marchi NOTARBARTOLO &**
**GERVASI 33, Viale Bianca Maria**
**I-20122 Milano(IT)**

(54) **Adhesive film, a laminated panel obtained therefrom and a method for its production.**

⑤ A modified epoxy resin adhesive film deposited on release paper is particularly useful for improving the quality of a laminated panel with an inner expanded plastics layer.

The adhesive film is made to adhere to the surface of the expanded plastics layer, the paper removed and replaced with a prepreg of epoxy resin preferably having the same composition as that of the adhesive film.

EP 0 286 943 A2

# ADHESIVE FILM, A LAMINATED PANEL OBTAINED THEREFROM AND A METHOD FOR ITS PRODUCTION

This invention relates to an adhesive film deposited on release paper and a method for its use in the preparation of laminated panels with an inner expanded plastics layer.

For some decades, objects have been produced in composite material consisting of synthetic, natural or other woven or non-woven fibres and a matrix of thermosetting synthetic resins, in particular polyesters and epoxy resins.

The simplest and still most widely used method for forming composite objects consists of manually impregnating fabric or mat in or over a mould with a resin having a viscosity such as to enable this procedure to be carried out at ambient temperature or at only moderate temperature compatible with the manual requirements of the procedure.

When the object has been formed, it is left for the time necessary for hardening the resin matrix, which takes place without adding heat (ambient temperature) if the curing reaction is reasonably fast at ambient temperature, or by heating the mould (40-50°C) if the curing reaction is sufficiently fast only at higher than ambient temperature (but compatible with manual handling).

This manual procedure, which as stated is still by far the most widely used, has however certain drawbacks:

a) Resin curing is never total. In reality, what is obtained by the aforesaid method is an object having constant mechanical characteristics up to glass transition temperatures not exceeding 60-70°C.

If total curing and thus a higher glass transition temperature (Tg) are required, the object must be subjected to a hot post-hardening cycle in a mould or to successive gradual heating cycles to prevent deformation of the object at the previously attained Tg. In this case the working time is very long and productivity consequently very low.

b) The final product does not have constant characteristics. The characteristics of a composite materials also depend on the fibre/binder ratio and proper fibre impregnation. As the object is manually produced, it is not possible to obtain homogeneous impregnation and constant fibre/binder ratio at every point.

c) Poor environmental hygiene. In spite of attempts to improve the health conditions of working environments by appropriate means, it is practically impossible when working the entire day with fluid resins of high monomer content and low molecular weight to avoid contact with them or breathe their vapour.

d) Material wastage. As the resins used are mostly resins which react at ambient temperature, they have a limited life once ready for use. Thus it is often impossible to apply all the prepared resin, and part of it remains to harden in the drum and then be thrown away.

The pre-impregnation method was therefore developed to improve certain aspects of manual working. With this method the fabric and fibre are pre-impregnated by immersion in a tank containing the impregnation resins, and are then wrung out by various methods to obtain a constant fibre/resin ratio. If a continuous filament is to be pre-impregnated, it is afterwards used continuously by the filament-winding method to form the objects to be produced.

If a fabric is to be pre-impregnated, after wringing out it is passed through an oven to evaporate the solvent if the resin in the tank is in solution and, solvent or not, to advance the curing of the matrix as far as the required degree.

Obviously the temperature to be reached in this stage depends on the type of solvent used and the type of polymer, and also on the degree of hardening to be obtained.

The presence of so many parameters to be evaluated makes it difficult to identify the critically optimum conditions. In any event, generally a temperature of 60-120°C is used for a time of 5-10 minutes in the impregnation stage, while generally in the final forming and total curing stage the time is not less than 60 minutes, and sometimes several hours, with a temperature of 120-200°C.

The pre-impregnated but still plastic fabric is collected in rolls, or in sheets if the matrix is sufficiently rigid even if only partially cured.

In all cases these are materials which, because of their formation and the total curing of their matrix with consequent three-dimensional crosslinking, require moulds heated to high temperatures and hardening cycles which are sometimes very complicated and lengthy. For this reason such materials have found wide application where the requirement for high performance and constant quality are such fundamental factors as to make the high production cost of the objects manufactured from them acceptable. In this respect, prepregs are widely used and find ever increasing application in the aeronautics industry, in the high performance sports equipment sector, in prototype construction and in the construction of racing and rally automobiles.

The term "prepreg" generally indicates a material in sheet form (ready for final forming in a mould) which can consist of a synthetic, natural or other (graphite, boron, metal, glass) woven or unwoven fabric, or fibre, which is impregnated with a thermosetting resin cured to prevent migration.

The thermosetting resin forming the matrix is cured as far as so-called reaction stage B, ie to the point at which the resin can still swell if treated with solvent, or soften if heated, but can no longer dissolve in solvents or melt. In spite of their costs, the excellent characteristics of composite materials increasingly attract the attention of technicians and designers even of other less sophisticated industrial sectors involving mass production and the production of large-dimension pieces in which the heating of prepregs creates considerable problems, whether done on a mould or not, and possible applications for them are increasingly sought. However in such cases, an essential factor for their widespread use is the attainment of high productivity.

Commercially available prepregs with a thermosetting matrix however require too lengthy times and too high temperatures for their curing. This does not allow production rates compatible with normal industrial processes.

The currently most advantageous curing times and temperatures in the final forming stage are of the order of 40-80 minutes and 120-130°C.

In a simultaneous patent application, the applicant has indicated that it is possible to prepare prepregs having characteristics which allow them to be formed into finished pieces at lower temperatures and in shorter times than are currently possible, by using epoxy resin matrices containing catalysts of $BF_3$ amine complex type.

Said patent application states that it is possible to reduce the curing times and temperatures of the final forming stage, for equal finished product characteristics, from 40-80 minutes at 120-130°C to 3-5 minutes at the same temperature.

Alternatively, it is possible to maintain the curing time at 40-80 minutes but reduce the temperature to 80°C.

It is thus possible to produce composite material structures which also comprise expanded polystyrene or PVC which do not withstand temperatures exceeding 90°C, such as sandwich panels with their interior formed from expanded polystyrene or PVC, without being obliged to use manual forming of said panels as in the prior art (and with all the aforesaid relative defects).

It has now been found that if an epoxy resin is modified by reacting it in a first stage with a diisocyanate and then reacting the obtained product with a butadiene homopolymer or a copolymer of butadiene with styrene or acrylonitrile (AB, BS, ABS), the final resultant product is very tacky and elastic while maintaining the capacity of the original epoxy resin to cross-link with the catalysts and with normally used hardeners.

The epoxy resins useful for implementing the present invention have a molecular weight of between 300 and 2000, an epoxide equivalent of between 150 and 1000 and a hydroxyl equivalent of between 400 and 4000.

The epoxy resin hydroxyl groups react with one of the two isocyanic groups of the diisocyanate used, whereas the second subsequently reacts with the butadiene homopolymer or copolymer to allow it to link to the epoxy resin.

The diisocyanates usable in implementing the present invention are of aliphatic, aromatic or cycloaliphatic type with a molecular weight between 140 and 400.

Particularly preferred are toluenediisocyanate, hexamethylenediisocyanate, trimethylhexamethylenediisocyanate, isophoronediisocyanate and diphenylmethanediisocyanate.

The ratio of the hydroxyl equivalent of the epoxy resin to the isocyanic equivalent of the diisocyanate which participate in the reaction is typically maintained between 1:2 and 1:20.

Butadiene homopolymers or copolymers usable for implementing the present invention have a molecular weight between 2000 and 8000 and a hydroxyl equivalent of between 800 and 5000, their weight ratio to the epoxy resin being typically between 1:1 and 5:1.

The two reaction stages are typically conducted in a nitrogen atmosphere at temperatures between 100 and 150°C and preferably in the absence of solvent, each for a time of between 1 and 5 hours.

If instead the reaction is conducted in a solvent, this is preferably chosen from aliphatic, cycloaliphatic or aromatic ketones and aromatic hydrocarbons.

If obtained in the absence of solvent, the final product is normally dissolved in a little solvent of ketone type, preferably acetone, to allow mixing with the catalyst and any other components, and to allow its comfortable use.

By depositing on release paper a thin layer of said modified resin mixed with one or more catalysts chosen from the group consisting of complexes of boron trifluoride with phenylamine, diphenylamine and 4-chloro-phenylamine, possibly mixed with short glass, synthetic, artificial or carbon fibre, fillers, additives, dyes, optical stabilizers, antiflame products or flame retardants, a highly adhesive rubbery film is obtained.

The quantity of catalyst added to the resin is typically between 3 and 10 parts by weight per 100 parts of modified resin.

The term "release paper" signifies a paper the surface of which has been treated with antiadhesive materials of silicone or other type in such a manner as to allow its easy removal from the adhesive film which is formed on it.

The adhesive film, typically with a thickness of between 50 nanometres and 2 millimetres, is particularly useful for producing laminated panels with an outer layer based on epoxy resin prepregs and an inner expanded plastics layer, in that it allows perfect bonding between the outer layer and inner layer if it is placed between the two layers before final hardening of the matrix.

In this respect, the prepreg constituting the outer layer is in contact with a continuous resin surface of the same type as the constituent resin of its matrix, which thus cross-links and hardens with the same catalytic systems and under the same operating conditions. This fact enables a fixing to be obtained between the outer and inner parts of the final panel which is much better than that obtainable by currently used methods.

In a preferred embodiment of the method for producing laminated panels according to the present invention the modified epoxy resin used to prepare the adhesive film deposited on the release paper is the same which was previously used to prepare the prepreg used to form the outer layer of the final laminated panel.

According to a further typical embodiment of the present invention, the epoxy resin modified as described can be mixed with a non-modified epoxy resin, as a content of 2-3% w w of modified resin is sufficient to give a degree of tackiness to the non-modified resin, so making it suitable for particular uses.

In addition to the normally used systems of filament winding and tape winding, with the resin compositions according to the present invention it is possible after impregnation to deposit a fibre or an assembly of fibres, a tape or a braid by means of a heated robotised dispenser head on any mould and in the required directions. This enables fibres to be deposited along the lines of force (eg. isostress) without the limits of currently known technology based on rotation and which obliges certain preferential directions to be followed.

The following examples are given to better illustrate the invention, but without in any way implying a limitation thereon.

In the following examples, the term "Specifications 720-E-7781" applies to the sum total of laminate characteristics defined by Boeing Materials Specifications.

EXAMPLE 1

67.3 parts of bisphenol A epoxy resin with a molecular weight of about 420 are fed into a reactor fitted with a stirrer and reflux condenser under a nitrogen atmosphere and the temperature raised to 130°C. 4.7 parts of toluene diisocyanate are added slowly at this temperature while stirring. The temperature is maintained at 130°C for 3 hours while continuing to stir slowly. 31.6 parts of polybutadiene homopolymer with terminal hydroxyls having a molecular weight of about 2800 and a hydroxyl equivalent of about 1200 are then added and stirring continued. The temperature is returned to 130°C and held for a further 3 hours. The contents are then discharged.

The resultant product is a semisolid resin having an epoxide equivalent of about 330.

EXAMPLE 2

A glass fabric support material was immersed at ambient temperature in a solution in acetone of a bisphenol A epoxy resin of M.W. 500 and epoxide equivalent 250, and a complex of $BF_3$ with phenylamine.

The weight ratio of resin to boron trifluoride complex present in the solution was 100:4.

The solution also contained 1.5 parts of red phosphorus.

The resin concentration in the acetone was 75% by weight.

After impregnation, the prepreg was fed into an oven at a temperature of 60-80°C to evaporate the solvent and trigger the reaction to obtain the required degree of stickiness. The time of remaining in the oven was normally 5-8 minutes. The prepreg was then rolled up and preserved in a refrigerator at about -20°C.

Its refrigerator life at -20°C exceeds 6 months, whereas at +20°C it is three-four days.

The mechanical characteristics of a laminate formed from the prepreg with the aforesaid matrix and hardened for one hour at 80°C are of the same order of magnitude, for equal fibre content, as those of a commercially available prepreg hardened for one hour at 120°C, and satisfy specifications 720-E-7781.

EXAMPLE 3

The following products were fed into a vessel fitted with a stirrer:
- bisphenol A epoxy resin used in Example 2 50 parts by weight
- modified resin of Example 1      16 parts by weight
- glass fibres cut to about 1 mm      8 parts by weight
- pyrogenic silica      3 parts by weight
- acetone      15 parts by weight

- boron trifluoride phenylamine    3 parts by weight

The mixture was stirred at ambient temperature until a homogeneous paste was obtained, which was then spread over a release paper by a spreader to a thickness of about 200 nanometres.

The film was then dried and pre-cured by passage through an oven for 10 minutes at 70°C.

The film obtained in this manner was used as an adhesive layer between an expanded PVC sheet of density 55 kg/m³ and a prepreg formed as described in Example 2.

After curing at 80°C for 90 minutes, the panel obtained was subjected to a peel test (ISO 4578 method) and showed a peeling resistance exceeding the cohesion of the inner PVC layer, which ruptured without separating from the prepreg.

EXAMPLE 4

A glass fabric weighing 300 g/m² was impregnated with an acetone solution having the following composition:
- bisphenol A epoxy resin of average molecular weight about 1200    80 parts by weight
- modified resin on Example 1    20 parts by weight
- boron trifluoride/4-chlorophenylamine    0.5 parts by weight
- boro trifluoride/phenylamine    3.0 parts by weight
- acetone    quantity determined by impregnation plant requirements

After impregnation, the prepreg was passed into an oven at a temperature of 60-80°C to evaporate the solvent and trigger the reaction to obtain the required degree of stickiness. The time of remaining in the oven was normally 5-8 minutes. The prepreg was then rolled up and preserved in a refrigerator at about -20°C.

Its refrigerator life at -20°C exceeds 6 months, whereas at +20°C it is three-four days.

Curing at 80°C took 60-90 minutes and the glass transition temperature attained was 95-105°C. Curing at 120°C took 3-5 minutes and the glass transition temperature attained was 110-120°C.

The mechanical characteristics of a laminate formed from the prepreg with the aforesaid matrix and hardened for one hour at 80°C are of the same order of magnitude, for equal fibre content, as those of a commercially available prepreg cured in 60-90 minutes at 120-130°C, and satisfy Boeing Materials Specifications (BMS) 720-E-7781

Claims

1. An adhesive film deposited on release paper comprising a modified epoxy resin either alone or in mixture with an unmodified resin, and one or more catalysts chosen from the group consisting of complexes of boron trifluoride with phenylamine, diphenylamine, and 4-chloro-phenylamine.

2. An adhesive film deposited on release paper as claimed in claim 1, characterised in that the epoxy resin is modified by reaction with a diisocyanate and with a butadiene homopolymer or copolymer.

3. An adhesive film deposited on release paper as claimed in claim 2, characterised in that the butadiene homopolymer or copolymer has a molecular weight of between 800 and 5000 and its weight ratio to the epoxy resin is between 1:10 and 5:1.

4. An adhesive film deposited on release paper as claimed in claim 1, characterised in that its thickness is between 0.05 and 5 mm.

5. An adhesive film deposited on release paper as claimed in claim 1, characterised by containing one or more inert substances of the glass mat type, fibres, additives, fillers, flame retardants, dyes or stabilisers.

6. A prepreg with an epoxide matrix comprising an epoxy resin modified both with a diisocyanate and with a butadiene homopolymer or copolymer and provided either alone or in mixture with an unmodified resin, plus one or more catalysts chosen from the group consisting of complexes of boron trifluoride with phenylamine, diphenylamine and 4-chlorophenylamine.

7. A prepreg with an epoxide matrix as claimed in claim 6, characterised in that said modified epoxy resin contains one or more additives, fillers, flame retardants, dyes or stabilizers.

8. A method for producing laminated panels with an expanded plastics interior, characterised by causing to adhere to the surfaces of said expanded plastics the unprotected part of an adhesive film deposited on release paper in accordance with claim 1, then removing the release paper and replacing it with a prepreg having an epoxy resin matrix, then subjecting the obtained panel to pressure and heating it to a temperature not exceeding 85°C so as to complete the curing of the resin.

9. A method as claimed in claim 8, characterised in that the prepreg matrix is an epoxy resin modified by reaction both with a diisocyanate and with a butadiene homopolymer or copolymer, and provided either alone or in mixture with an unmodified resin.

10. A method as claimed in claim 10, characterised in that said expanded plastics is PVC, polystyrene, polyurethane or phenolic resin.